# EUROPEAN PATENT APPLICATION

(11) **EP 4 734 535 A1**
(43) Date of publication of application: **29.04.2026**
(21) Application number: 25744673.2
(22) Date of filing: 23.01.2025
(51) Int. Cl.: H04N 21/485

(54) **THUMBNAIL DISPLAY METHOD AND ELECTRONIC DEVICE**

(30) Priority: 26.01.2024 CN 202410115867
(71) Applicant: Huawei Technologies Co., Ltd., Shenzhen, Guangdong 518129 (CN)
(72) Inventor: GU, Dehe, Shenzhen, Guangdong 518129 (CN); LIANG, Jiaxi, Shenzhen, Guangdong 518129 (CN); MAO, Jingjing, Shenzhen, Guangdong 518129 (CN); JIANG, Junchao, Shenzhen, Guangdong 518129 (CN); DAI, Rui, Shenzhen, Guangdong 518129 (CN)
(74) Representative: Thun, Clemens
(86) International application number: PCT/CN2025/074238
(87) International publication number: WO 2025/157210

(57) **Abstract**

This application provides a thumbnail display method and an electronic device. In the technical solution, a target picture may have a plurality of thumbnails with different dimensions. When displaying a thumbnail with a relatively large dimension of the target picture, the electronic device may first display a thumbnail with a relatively small dimension of the target picture, decode the thumbnail with the relatively large dimension in a background, and replace the thumbnail with the relatively small dimension with the thumbnail with the relatively large dimension after decoding is completed. According to the technical solution, a speed of displaying a thumbnail by the electronic device can be increased, and a phenomenon of displaying a blank block when a plurality of thumbnails are displayed at a time can be avoided.

## Description

This application claims priority to Chinese Patent Application No. 202410115867.5, filed with China National Intellectual Property Administration on January 26, 2024 and entitled "THUMBNAIL DISPLAY METHOD AND ELECTRONIC DEVICE", which is incorporated herein by reference in its entirety.

### TECHNICAL FIELD

Embodiments of this application relate to the field of electronic technologies, and more specifically, to a thumbnail display method and an electronic device.

### BACKGROUND

When displaying a picture, an electronic device often needs to quickly switch a displayed picture with a sliding operation of a user. For example, when the user quickly browses thumbnails of pictures in a gallery application, the electronic device displays a relatively large quantity of thumbnails at a time, and a quick sliding operation of the user easily causes a phenomenon that the electronic device displays a blank block.

### SUMMARY

This application provides a display method and an electronic device. According to the technical solution, when displaying a thumbnail of a target picture, the electronic device may first display a thumbnail with a relatively small dimension, and the electronic device reads the thumbnail with the relatively small dimension at a relatively high speed. Therefore, a speed of displaying the thumbnail by the electronic device can be increased, and a phenomenon of displaying a blank block when a plurality of thumbnails are displayed at a time can be avoided.

According to a first aspect, a thumbnail display method is provided, where the method is applied to an electronic device, and the method includes: obtaining a first target thumbnail and a second target thumbnail in response to a first operation of enabling the electronic device to display a thumbnail of a target picture, where the first target thumbnail and the second target thumbnail are thumbnails with different dimensions of the target picture, and a dimension of the first target thumbnail is greater than a dimension of the second target thumbnail; displaying the second target thumbnail in a display region used to display the thumbnail of the target picture; decoding the first target thumbnail; and replacing the second target thumbnail in the display region with the first target thumbnail after decoding of the first target thumbnail is completed.

For example, the first target thumbnail may be a daily thumbnail, and the second target thumbnail may be a thumbnail whose dimension is less than that of the daily thumbnail, such as a monthly thumbnail or a yearly thumbnail.

For example, the first operation may be an operation used to display the first target thumbnail of the target picture.

Based on this embodiment of this application, in response to the first operation of enabling the electronic device to display the thumbnail of the target picture, the electronic device may obtain the first target thumbnail with a relatively large dimension and the second target thumbnail with a relatively small dimension of the target picture, display the second target thumbnail with a relatively small dimension in the display region used to implement the thumbnail of the target picture, decode the first target thumbnail in a background, and replace the second target thumbnail in the display region with the first target thumbnail after decoding of the first target thumbnail is completed.

In this way, when displaying a thumbnail of a target picture, the electronic device may first display a thumbnail with a relatively small dimension, and the electronic device reads the thumbnail with the relatively small dimension at a relatively high speed. Therefore, a speed of displaying the thumbnail by the electronic device can be increased, and a phenomenon of displaying a blank block when a plurality of thumbnails are displayed at a time can be avoided.

With reference to the first aspect, in some implementations of the first aspect, when the electronic device stores the first target thumbnail and the second target thumbnail, an encoding compression rate of the first target thumbnail is greater than an encoding compression rate of the second target thumbnail; or the first target thumbnail is stored in a format requiring encoding compression, and the second target thumbnail is stored in a format not requiring encoding compression.

For example, the encoding compression rate of the first target thumbnail is relatively high. For example, the first target thumbnail may be stored in a JPG or PNG format. The encoding compression rate of the second target thumbnail is relatively low. For example, the second target thumbnail may be stored in a texture format. Alternatively, the second target thumbnail may be stored in a format not requiring encoding compression. For example, the second target thumbnail may be stored in a bitmap format.

It should be understood that a storage format not requiring encoding compression may also be understood as a storage format with an encoding compression rate 0.

Based on this embodiment of this application, the encoding compression rate of the first target thumbnail is greater than the encoding compression rate of the second target thumbnail; or the first target thumbnail is stored in a format requiring encoding compression, and the second target thumbnail is stored in a format not requiring encoding compression.

In this way, the electronic device can quickly display the second target thumbnail, so that a phenomenon of displaying a blank block can be avoided.

With reference to the first aspect, in some implementations of the first aspect, obtaining the first target thumbnail and the second target thumbnail in response to the first operation of enabling the electronic device to display the thumbnail of the target picture includes: obtaining an index of the first target thumbnail and an index of the second target thumbnail in response to the first operation; and obtaining the first target thumbnail and the second target thumbnail based on the index of the first target thumbnail and the index of the second target thumbnail.

Based on this embodiment of this application, the electronic device may obtain the first target thumbnail based on the index of the first target thumbnail, and obtain the second target thumbnail based on the index of the second target thumbnail, so that the electronic device can quickly obtain the thumbnail.

With reference to the first aspect, in some implementations of the first aspect, before the response to the first operation, the method further includes: for a thumbnail with a target dimension, creating a target file used to store the thumbnail with the target dimension, where the target file has continuous storage space with a first target size; and when the thumbnail with the target dimension is stored, writing the thumbnail with the target dimension into the continuous storage space of the target file based on index information of the target file.

Based on this embodiment of this application, for a thumbnail with a target dimension, the electronic device may be configured to store a target file of the thumbnail. The target file has continuous storage space. When storing the thumbnail with the target dimension, the electronic device stores the thumbnail with the target dimension into the continuous storage space of the target file.

In this way, when storing a plurality of thumbnails, the electronic device can implement continuous storage of the thumbnails, to avoid scattered storage of the plurality of thumbnails, so that when the thumbnails need to be read subsequently, the thumbnails can be continuously read, thereby increasing a speed of reading the thumbnails.

With reference to the first aspect, in some implementations of the first aspect, writing the thumbnail with the target dimension into the continuous storage space of the target file based on the index information of the target file includes: determining next available storage space in the continuous storage space based on the index information; and writing the thumbnail with the target dimension into the next available storage space.

Based on this embodiment of this application, the target file may have index information, so that when storing the thumbnail, the electronic device can find next available storage space by using the index information, and store the thumbnail into the next available storage space, thereby implementing continuous storage of the thumbnail.

With reference to the first aspect, in some implementations of the first aspect, the electronic device allocates same storage space to thumbnails with a same target dimension.

Based on this embodiment of this application, the electronic device allocates same storage space to thumbnails with a same target dimension. In this way, performance of reading a thumbnail by the electronic device can be improved.

With reference to the first aspect, in some implementations of the first aspect, the method further includes: when the continuous storage space of the target file is fully written, allocating continuous storage space with a second target size to the target file.

For example, the second target size may be M times the first target size, and M is a positive integer.

It should be understood that the continuous storage space with the first target size and the continuous storage space with the second target size may be continuous or discontinuous.

Based on this embodiment of this application, when the continuous storage space of the target file is fully written, the electronic device continues to allocate the continuous storage space of the second target size to the target file, so that subsequently stored thumbnails can also be continuously stored.

With reference to the first aspect, in some implementations of the first aspect, a storage format of the second target thumbnail includes a bitmap or a texture.

It may be understood that the storage format of the second target thumbnail may alternatively include another storage format with a relatively low encoding compression rate, or another storage format not requiring encoding compression.

Based on this embodiment of this application, the storage format of the second target thumbnail includes a bitmap or a texture. In this way, the electronic device does not need to perform decoding when displaying the second target thumbnail, so that a speed of displaying the thumbnail by the electronic device can be increased, and a phenomenon of displaying a blank block can be avoided.

With reference to the first aspect, in some implementations of the first aspect, the first operation is an operation used to trigger the electronic device to display a thumbnail with a first target dimension, the first target dimension is the dimension of the first target thumbnail, and the method further includes: obtaining the second target thumbnail in response to a second operation of enabling the electronic device to display the thumbnail of the target picture, where the second operation is an operation used to trigger the electronic device to display a thumbnail with a second target dimension, the second target dimension is the dimension of the second target thumbnail, and the second target dimension is less than the first target dimension; and displaying the second target thumbnail in the display region.

For example, the first target dimension may be 256*256, and the second target dimension may be 128*128, 64*64, or the like.

Based on this embodiment of this application, the electronic device may obtain the second target thumbnail in response to the second operation of enabling the electronic device to display the thumbnail with the second target dimension, and directly display the second target thumbnail. In this way, a speed of displaying a thumbnail by the electronic device can be increased, and displaying a blank block can be avoided.

With reference to the first aspect, in some implementations of the first aspect, the method further includes: in a case in which decoding of the first target thumbnail is not completed, canceling a decoding operation performed on the first target thumbnail when determining that the first target thumbnail does not need to be continuously displayed.

Based on this embodiment of this application, in a case in which decoding of the first target thumbnail is not completed, the electronic device cancels the decoding operation performed on the first target thumbnail when determining that the first target thumbnail does not need to be continuously displayed. In this technical solution, the first target thumbnail can be prevented from being decoded when the first target thumbnail does not need to be displayed, thereby reducing power consumption of the electronic device.

With reference to the first aspect, in some implementations of the first aspect, determining that the first target thumbnail does not need to be continuously displayed includes: when the electronic device no longer displays the display region, determining that the first target thumbnail does not need to be continuously displayed.

That the electronic device no longer displays the display region may include: The electronic device needs to display another thumbnail with a sliding operation of a user; or the electronic device responds to an operation of exiting a gallery by the user.

Based on this embodiment of this application, the electronic device may determine whether to continue to display the first target thumbnail.

According to a second aspect, an electronic device is provided, including one or more processors and one or more memories. The one or more memories store one or more programs, and when the one or more programs are executed by the one or more processors, the thumbnail display method according to any one of the first aspect and the possible implementations of the first aspect is performed.

According to a third aspect, a thumbnail display apparatus is provided, including a module configured to implement the thumbnail display method according to any one of the first aspect and the possible implementations of the first aspect.

According to a fourth aspect, a chip is provided. The chip includes a processor and a communication interface, the communication interface is configured to receive a signal and transmit the signal to the processor, and the processor processes the signal, so that the thumbnail display method according to any one of the first aspect and the possible implementations of the first aspect is performed.

According to a fifth aspect, a readable storage medium is provided. The readable storage medium stores instructions, and when the instructions are run on an electronic device, the thumbnail display method according to any one of the first aspect and the possible implementations of the first aspect is performed.

According to a sixth aspect, a program product is provided. The program product includes program code, and when the program code is run on an electronic device, the thumbnail display method according to any one of the first aspect and the possible implementations of the first aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) and FIG. 3(b) are a diagram of a scenario to which an embodiment of this application is applicable;
FIG. 4 is a diagram of a system architecture according to an embodiment of this application;
FIG. 5 is a diagram of a file organization manner according to an embodiment of this application;
FIG. 6 is a diagram of a user mode module according to an embodiment of this application;
FIG. 7 is a diagram of another file organization manner according to an embodiment of this application;
FIG. 8 is a diagram of allocating continuous storage space according to an embodiment of this application;
FIG. 9 is a schematic flowchart of a method for continuously storing thumbnails according to an embodiment of this application;
FIG. 10 is a schematic flowchart of reading a thumbnail according to an embodiment of this application;
FIG. 11 is another schematic flowchart of reading a thumbnail according to an embodiment of this application;
FIG. 12 is a schematic flowchart of a thumbnail display method according to an embodiment of this application; and
FIG. 13 is a block diagram of an electronic device according to an embodiment of this application.

### DESCRIPTION OF EMBODIMENTS

The following describes technical solutions of this application with reference to accompanying drawings.

A thumbnail display method in embodiments of this application may be applied to an electronic device, for example, a smartphone, a tablet computer, a notebook computer, a personal computer (personal computer, PC), an ultra-mobile personal computer (ultra-mobile personal computer, UMPC), a netbook, a vehicle-mounted device, a wearable device, a foldable device, and an internet of things (internet of things, IOT) device.

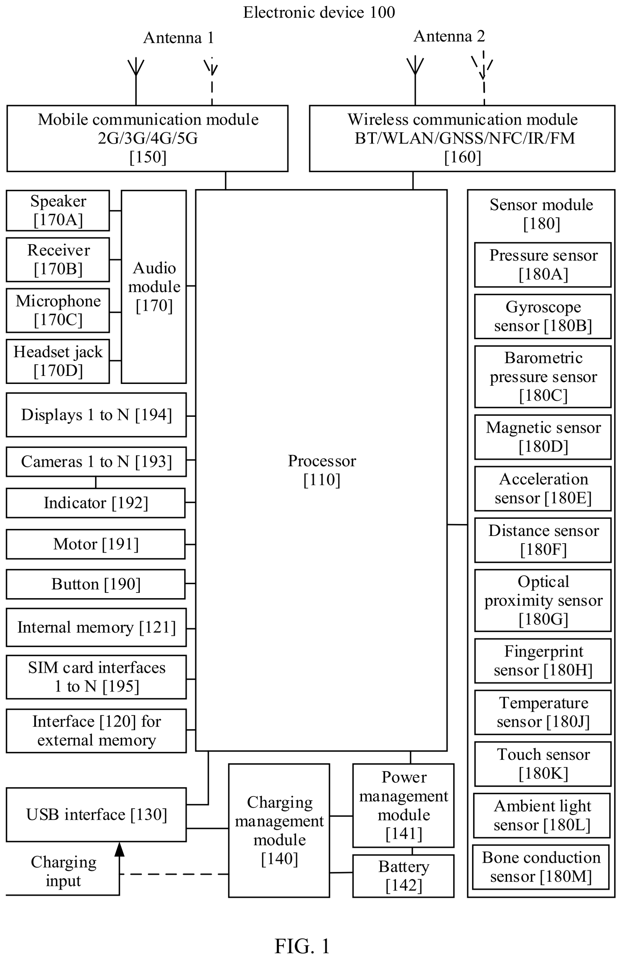

FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The I2C interface is a bidirectional synchronization serial bus, and includes a serial data line (serial data line, SDA) and a serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be used to perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral component such as the display 194 or the camera 193.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), or may be a display panel made of one of materials such as an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a Miniled, a MicroLed, a Micro-oLed, or a quantum dot light-emitting diode (quantum dot light-emitting diode, QLED). In some embodiments, the electronic device 100 may include one or N displays 194, where N is a positive integer greater than 1.

The electronic device 100 may implement a photographing function through the ISP, the camera 193, the video codec, the GPU, the display 194, the application processor and the like.

The ISP is configured to process data fed back by the camera 193. The camera 193 is configured to capture a static image or a video.

The digital signal processor is configured to process a digital signal, and may process another digital signal in addition to the digital image signal.

The video codec is configured to compress or decompress a digital video.

The interface 120 for external memory may be used to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function, for example, music playing and recording, through the audio module 170, the speaker 170A, the receiver 170B, the microphone 170C, the headset jack 170D, and the application processor.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The sensor module 180 may include a pressure sensor 180A, a gyroscope sensor 180B, a barometric pressure sensor 180C, an acceleration sensor 180E, a distance sensor 180F, a fingerprint sensor 180H, a touch sensor 180K, a bone conduction sensor 180M, and the like.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

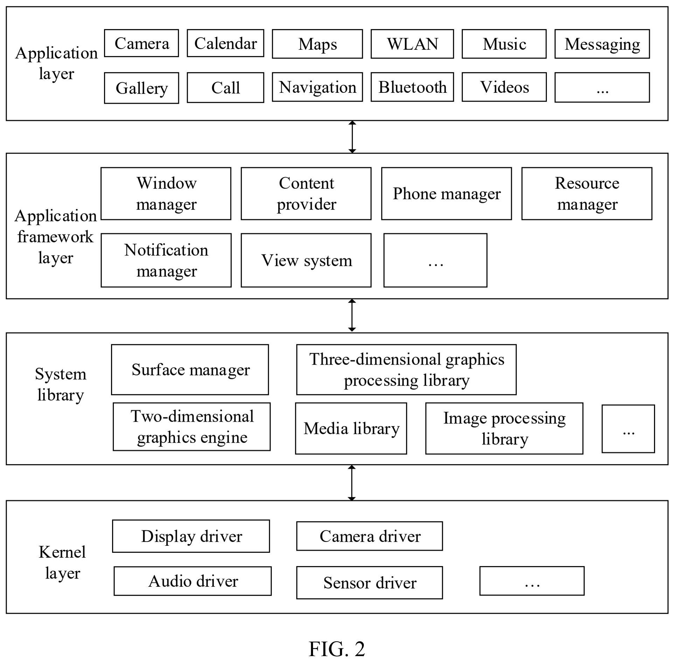

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Call, Maps, Navigation, WLAN, Bluetooth, Music, Videos, Messaging, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or the indicator blinks.

The core library includes two parts: One part is a performance function that a java language needs to invoke, and the other part is a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions of this application are described, some technical terms that may be related in this application are first described as follows.

Thumbnail: In embodiments of this application, the thumbnail may be understood as a preview picture that is in a gallery of an electronic device and that is used by a user to quickly browse a picture. Generally, a dimension of the thumbnail is relatively small, so that the electronic device can quickly display a plurality of thumbnails. In embodiments of this application, the thumbnail may be presented in a plurality of different views, for example, a daily view (or referred to as a grid view), a monthly view, and a yearly view. The dimension of the thumbnail can be represented by "pixel*pixel". For example, the dimension of the thumbnail in the daily view may be 256*256, the dimension of the thumbnail in the monthly view may be 128*128, and the dimension of the thumbnail in the yearly view may be 64*64. Generally, the dimension of the thumbnail in the daily view is greater than that in the monthly view, and the dimension of the thumbnail in the monthly view is greater than that in the yearly view. In embodiments of this application, the thumbnail in the daily view, the thumbnail in the monthly view, and the thumbnail in the yearly view may be referred to as a "daily thumbnail", a "monthly thumbnail", and a "yearly thumbnail".

For ease of description, in embodiments of this application, an example in which the electronic device displays a thumbnail in a daily view is used to describe a scenario to which embodiments of this application are applicable. However, this does not constitute a limitation on an application scenario of the technical solutions provided in embodiments of this application.

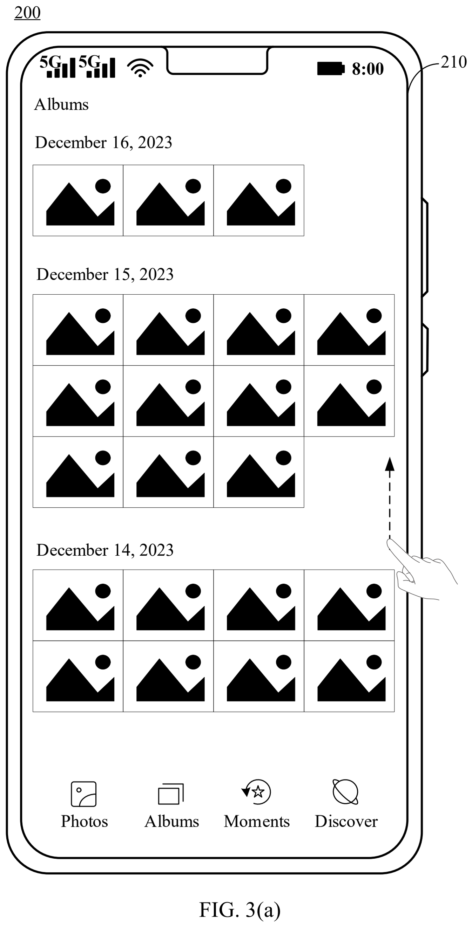

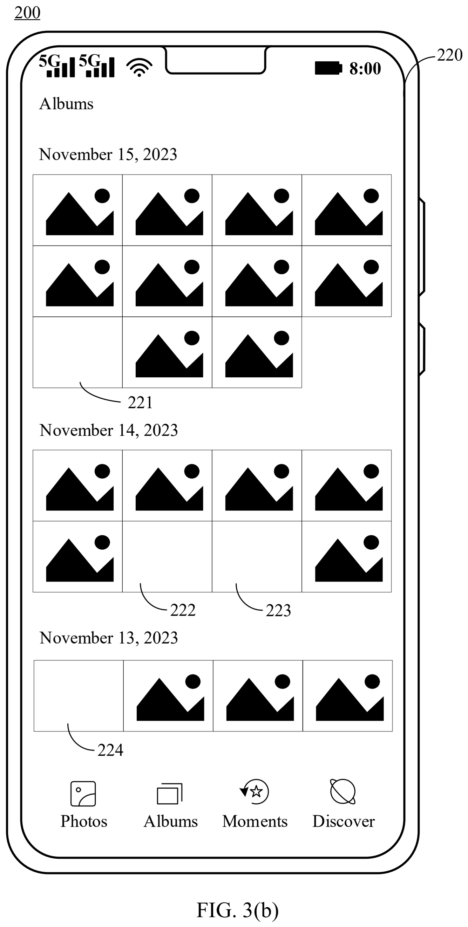

For example, FIG. 3(a) and FIG. 3(b) are a diagram of a scenario to which an embodiment of this application is applicable. Graphical user interfaces (graphical user interface, GUI) in FIG. 3(a) and FIG. 3(b) show a process in which an electronic device 200 displays a picture in response to an operation of a user.

Refer to FIG. 3(a). The GUI may be a display interface 210 of a gallery application of the electronic device 200. The display interface 210 may be used to display a thumbnail of a picture in a daily view. On the display interface 210, thumbnails of pictures in the daily view are arranged based on a time sequence of shooting in each day. For example, the display interface 210 displays thumbnails, in the daily view, of pictures taken on dates "December 14, 2023 to December 16, 2023".

The electronic device 200 may switch, in response to a sliding operation of the user, to display thumbnails, in the daily view, of pictures taken on different dates.

For example, after detecting an operation of sliding upward on the display interface 210 by the user, the electronic device 200 may display the GUI shown in FIG. 3(b).

Refer to FIG. 3(b). The GUI may be a display interface 220 of the gallery application of the electronic device 200. The display interface 220 may be used to display thumbnails, in the daily view, of pictures taken on dates "November 13, 2023 to November 15, 2023".

When the electronic device displays the daily view, a display of the electronic device may display a plurality of daily thumbnails. For example, the display of the electronic device may display 32 daily thumbnails at a time. With a sliding operation performed by the user on the display interface of the gallery application, the electronic device 200 continuously switches a displayed daily thumbnail. However, when the user quickly slides, some blank blocks may exist in the daily thumbnails displayed in the electronic device, that is, some daily thumbnails are not displayed immediately, but are displayed after a period of time.

Still refer to FIG. 3(b). A daily thumbnail 221, a daily thumbnail 222, a daily thumbnail 223, and a daily thumbnail 224 in the display interface 220 are not displayed immediately, but are displayed as blank blocks.

A reason for this phenomenon is that each daily thumbnail is stored in the electronic device in a format of a Joint Photographic Experts Group (joint photographic experts group, JPG). When displaying each daily thumbnail, the electronic device needs to separately decode the daily thumbnail. Therefore, when a plurality of daily thumbnails are displayed on one screen, a picture decoding time is long, and a phenomenon of displaying a blank block is easily caused.

Similarly, when the electronic device displays a monthly view and a yearly view, the electronic device displays more thumbnails on one screen, and a phenomenon that the electronic device displays a blank block is more likely to be caused by a sliding operation of the user.

In view of this, embodiments of this application provide a thumbnail display method and an electronic device. In this technical solution, when displaying a target thumbnail, the electronic device may first display a thumbnail whose dimension is smaller than that of the target thumbnail, and the electronic device synchronously decodes the target thumbnail in a background, and displays the target thumbnail after decoding is completed. According to the technical solution, when a user performs a sliding operation to view a thumbnail of a picture displayed by the electronic device, a corresponding thumbnail can be quickly and smoothly displayed, thereby avoiding a phenomenon of displaying a blank block.

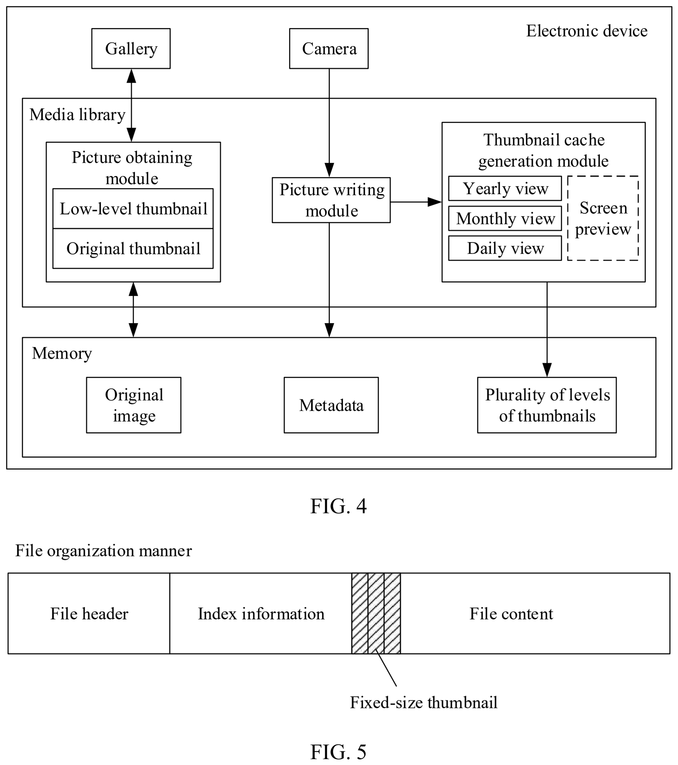

The following describes, with reference to FIG. 4 to FIG. 11, the technical solution of the display method provided in embodiments of this application.

For example, FIG. 4 is a diagram of a system architecture according to an embodiment of this application. As shown in FIG. 4, an electronic device may include at least a gallery application, a camera application, a media library, and a memory.

The media library may at least include a picture writing module, a picture obtaining module, and a thumbnail cache generation module.

The memory may store an original image and metadata of a picture, and a plurality of levels of thumbnails of the picture. The plurality of levels of thumbnails may be understood as thumbnails with different dimensions or sizes, for example, a daily thumbnail, a monthly thumbnail, and a yearly thumbnail.

For example, when the electronic device detects that a user uses a camera to take a picture A, the picture writing module may write the picture A into the memory. For example, the picture writing module may write an original picture of the picture A into the memory, and write metadata of the picture A into the memory.

After the picture A is written, the thumbnail cache generation module may generate a plurality of thumbnails with different dimensions corresponding to the picture A, and store the plurality of thumbnails with different dimensions into the memory. For example, the thumbnail cache generation module may generate thumbnails of a dimension 1, a dimension 2, and a dimension 3 corresponding to the picture A, and store the thumbnails of the dimension 1, the dimension 2, and the dimension 3 into the memory, where the dimension 1>the dimension 2>the dimension 3. For example, the dimension 1 may be corresponding to a daily thumbnail, the dimension 2 may be corresponding to a monthly thumbnail, and the dimension 3 may be corresponding to a yearly thumbnail.

It should be understood that, for each picture taken by the camera, the thumbnail cache generation module may generate a plurality of corresponding thumbnails with different dimensions. Alternatively, for each picture included in the gallery application, the thumbnail cache generation module may generate a plurality of corresponding thumbnails with different dimensions.

In another example, the thumbnail cache generation module may further generate a screen preview image corresponding to the picture A. A dimension of the screen preview image is the same as a dimension of the original picture of the picture A, but occupied storage space is less than storage space occupied by the original picture of the picture A.

It should be understood that the metadata of the picture A may include information such as a dimension or size, a storage location, a photographing time, and a photographing parameter of the picture A.

In another example, for a video B shot by the user by using the camera, the picture writing module may also write the video B and metadata of the video B into the memory. After the video B is written, the thumbnail cache generation module may generate a plurality of thumbnails with different dimensions corresponding to a cover picture of the video B, and store the plurality of thumbnails with different dimensions into the memory.

Generally, the electronic device stores thumbnails with different dimensions in a JPG format. In this manner, a picture has good compression performance, so that the picture occupies relatively small space of a read-only memory. However, when displaying a thumbnail, the electronic device needs to decode the thumbnail. When the electronic device needs to display a plurality of thumbnails at a time, a blank block phenomenon easily occurs.

In this embodiment of this application, for a thumbnail with a relatively large dimension (for example, a daily thumbnail), the electronic device may store the thumbnail into the memory in a format with a relatively high encoding compression rate. For a thumbnail with a relatively small dimension (for example, a monthly thumbnail or a yearly thumbnail), because the dimension is relatively small, the thumbnail may be stored into the memory in a format with a relatively low encoding compression rate or not requiring encoding compression. Alternatively, for a thumbnail whose dimension is greater than or equal to a preset dimension, the electronic device may store the thumbnail into the memory in a format with a relatively high encoding compression rate, and for another thumbnail whose dimension is less than the preset dimension, the electronic device may store the thumbnail into the memory in a format with a relatively low encoding compression rate or not requiring encoding compression.

For example, for a thumbnail with a relatively small dimension, the electronic device may store the thumbnail in a format with a relatively low encoding compression rate, such as a texture; or the electronic device stores the thumbnail in a format not requiring encoding compression, such as a bitmap.

A reason why the electronic device stores a thumbnail with a relatively small dimension in this way is that when the thumbnail with the relatively small dimension is stored into the memory in a bitmap or texture format, after obtaining data of this thumbnail, the electronic device can directly display this thumbnail without decoding, thereby increasing a speed of displaying the thumbnail.

Although thumbnails stored in a bitmap or texture format do not need to be decoded when being displayed, the electronic device still needs to read these thumbnails from the memory to a running memory, that is, reading of each thumbnail requires one data read operation of the electronic device. Therefore, when there are a relatively large quantity of thumbnails, and storage locations of the thumbnails are relatively scattered (or referred to as severe disk fragmentation), reading performance of the electronic device is affected, and a blank block phenomenon may still occur when the user quickly browses the thumbnails.

For this phenomenon, this embodiment of this application provides a thumbnail storage manner, so that thumbnails of different pictures can be continuously stored, and when reading the thumbnails, the electronic device can continuously read a large quantity of thumbnails, thereby improving read performance of the electronic device and avoiding a phenomenon of displaying a blank block. The following describes, with reference to FIG. 5 to FIG. 8, a technical solution of continuously storing thumbnails according to an embodiment of this application.

FIG. 5 is a diagram of a file organization manner according to an embodiment of this application. When creating, for the first time, a file used to store a thumbnail, an electronic device allocates continuous storage space with a preset size to the file. The file may be in a one-to-one correspondence with a dimension type of the thumbnail, and each file is responsible for organizing and storing data of a thumbnail of a corresponding dimension.

For example, when creating a thumbnail of a dimension 1 for the first time, the electronic device may create a file 1, where the file 1 is used to store the thumbnail of the dimension 1; and when a thumbnail whose dimension is also the dimension 1 is added subsequently, the electronic device may store the newly added thumbnail into the file 1. When creating a thumbnail of a dimension 2 for the first time, the electronic device may create a file 2, where the file 2 is used to store the thumbnail of the dimension 2; and when a thumbnail whose dimension is also the dimension 2 is added subsequently, the electronic device may store the newly added thumbnail into the file 2.

It should be understood that, that the file is used to store a thumbnail may be understood as that continuous storage space allocated by the electronic device to the file may be used to store data of the thumbnail.

The electronic device may allocate same storage space to thumbnails of a same dimension. It is assumed that the dimension 2 is 128*128, and the electronic device may allocate 32-kilobyte (kilobyte, KB) storage space to each thumbnail of the dimension 2. In this case, the continuous storage space allocated by the electronic device to the file 2 may be N times of 32 KB, where N is a positive integer. For example, when N is 64, a size of the storage space allocated by the electronic device to the file 2 is 2 consecutive megabytes (megabyte, MB).

It should be understood that, that the electronic device creates, for the first time, a file used to store a thumbnail may be that the electronic device creates the file when the electronic device is powered on for the first time, or may be that the electronic device creates the file when the electronic device takes a picture or shoots a video for the first time or stores a picture, a video, or a dynamic picture for the first time.

The file may have a file header and index information.

The file header may record key information such as a fixed-length size of a current thumbnail, a supported maximum file size, and a start location of the file. The fixed-length size of the thumbnail may indicate a fixed size of each thumbnail in the file, for example, 32 KB or 16 KB. The supported maximum file size may indicate maximum storage space of the file, for example, 2 MB or 4 MB. The start location of the file may indicate a location, in the memory, of the first thumbnail that starts to be stored by the file, for example, the start location may be an address A.

The index information may include an index and indication information indicating whether a storage location corresponding to the index is occupied. The index information is used to record an allocation status of a thumbnail stored in the file and available storage space in the file. The electronic device may determine an occupation status of the file by using the index information, for example, a location at which a thumbnail is stored in the file and storage space that is not occupied. Therefore, when a thumbnail needs to be stored subsequently, the electronic device may determine an available storage location in the file by using the index information, and may store data of the thumbnail that needs to be stored into the available storage location in the file.

For example, the indication information may be represented by "1" or "0", where "1" indicates "occupied", and "0" indicates "not occupied".

For example, for "an index 1, an index 2, an index 3, an index 4, and ..." in the index information, corresponding indication information is "1100 ...", which may indicate "storage space corresponding to the index 1 and the index 2 is occupied, and storage space corresponding to the index 3 and the index 4 is not occupied, ...". It should be understood that each index may correspond to one piece of storage space of a fixed size.

The electronic device may store the thumbnail into continuous storage space allocated to the file. When storing the thumbnail, the electronic device may determine, by searching the index information of the file, available storage space corresponding to an index, and store the thumbnail into the available storage space of the file. After the thumbnail is stored, the storage space is occupied, and the electronic device may modify indication information corresponding to the storage space, for example, modify the indication information from "0" to "1". In addition, an index corresponding to the thumbnail is returned to user mode space, so as to facilitate subsequent reading of the thumbnail.

In this manner, the electronic device may continuously store thumbnails, to avoid scattered storage of the thumbnails, so that the thumbnails can also be continuously read when the thumbnails are read subsequently, thereby improving performance of reading the thumbnails by the electronic device.

It should be understood that the index information is managed by a kernel, and an application does not sense allocation of the index of the thumbnail by the kernel. For example, for a gallery application, when the electronic device writes a thumbnail into the memory, the gallery application does not sense how an index of the thumbnail is allocated.

In this way, the application does not need to manage the index information of the thumbnail, and for a developer of the application, workload of developing the application is relatively low.

In another example, the index information may alternatively be managed in a user mode of the electronic device.

For example, the gallery application in the electronic device may establish a mapping relationship between a thumbnail and an index, that is, the index information is managed by the gallery application. In this case, when writing a thumbnail into the memory, the electronic device may determine available storage space by using the index information in the gallery application, store the thumbnail into the available storage space, and record a storage location of the thumbnail in the index information.

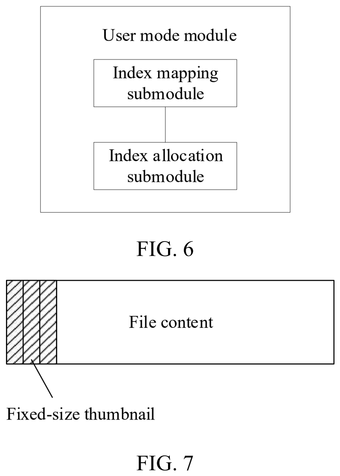

For example, FIG. 6 is a diagram of a user mode module according to an embodiment of this application. As shown in FIG. 6, the user mode module may include an index mapping submodule and an index allocation submodule.

For example, the user mode module may be a gallery application.

The index mapping submodule may be configured to record a stored mapping relationship between a thumbnail and an index. It should be understood that the mapping relationship may be stored into a memory.

The index allocation submodule may be configured to record a currently available index, and support allocation of a next available index when a new thumbnail is stored.

The index allocation submodule may be further configured to mark a released index. For example, when the electronic device deletes a thumbnail X based on an operation of a user, the index allocation submodule may mark that an index X corresponding to the thumbnail X has been released, and during next index allocation, may allocate the index X to a next stored thumbnail.

It should be understood that content recorded by the index allocation submodule may be stored into the memory.

In this case, for a file stored into the memory, refer to FIG. 7. For example, FIG. 7 is a diagram of another file organization manner according to an embodiment of this application. Refer to FIG. 7. A file in the memory may include continuously stored thumbnails, and each thumbnail occupies same storage space.

In this way, a user mode application manages and stores index information of the thumbnails, so that the thumbnails can be stored more conveniently without intervention by the kernel. In addition, the thumbnails are stored without intervention by the kernel, so that the application can support electronic devices with different systems and has good portability.

When storage space of the file is fully written or is about to be fully written, the electronic device continues to allocate continuous storage space with another preset size to the file. For example, the another preset size may be M times a current preset size.

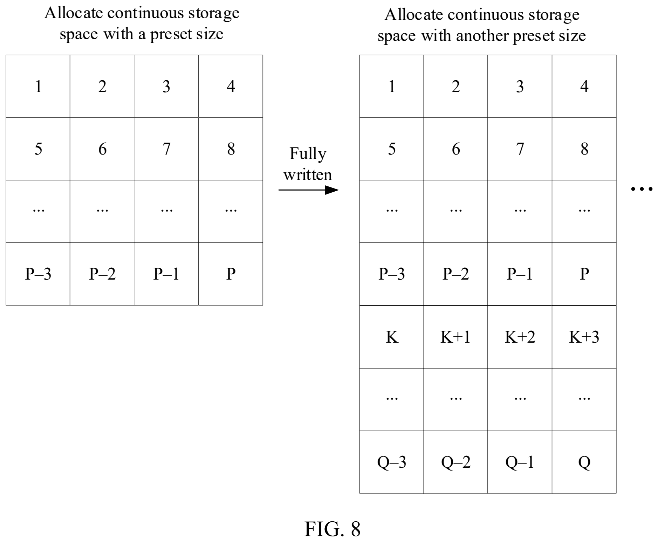

For example, FIG. 8 is a diagram of allocating continuous storage space according to an embodiment of this application. When the electronic device allocates storage space to a file for the first time, continuous storage space with a preset size may be allocated. For example, indexes of the continuous storage space may be 1, 2, 3, ..., and P, and the continuous storage space may store a maximum of P thumbnails. When the continuous storage space is fully written, or the continuous storage space is about to be fully written, the electronic device may continue to allocate continuous storage space with another preset size to the file. For example, indexes of the continuous storage space with the another preset size may be K, K+1, K+2, ..., and Q.

It should be understood that when the continuous storage space with the another preset size is fully written or is about to be fully written, the electronic device may continue to allocate continuous storage space with a specific size to the file. For example, newly allocated continuous storage space may be M times continuous storage space allocated previously.

For example, if continuous storage space with a size of 2M is allocated to the file for the first time, when the continuous storage space of 2M is fully written or is about to be fully written, the electronic device may continue to allocate continuous storage space with a size of 4M to the file. The 2M storage space and the 4M storage space may be continuous or discontinuous.

It may be understood that the file may store a thumbnail of a fixed size, for example, a thumbnail of 32 KB. If a thumbnail is less than 32 KB, when the thumbnail is stored, zero padding processing may be performed on storage space occupied by the thumbnail, so that the storage space finally occupied by the thumbnail is 32 KB.

In this way, the electronic device may separately and continuously store thumbnails of relatively small dimensions (for example, a yearly thumbnail and a monthly thumbnail). In this case, when subsequently reading the thumbnails, the electronic device may also continuously read the thumbnails. In addition, as described above, after data is read, the thumbnails can be directly displayed without decoding, thereby improving reading performance of the electronic device and avoiding a phenomenon of displaying a blank block.

In another example, when storing a thumbnail, the electronic device may alternatively store the thumbnail in a non-relational database in a key-value pair (key-value) format. In addition, when reading thumbnails, the electronic device continuously reads the thumbnails as much as possible to increase a data reading speed.

A thumbnail with a relatively large dimension (for example, a daily thumbnail) may also be stored based on or not based on the foregoing file organization manner. However, when a dimension of a thumbnail is relatively large, if the electronic device also stores the thumbnail in a bitmap or texture format, although decoding is not required during display, a compression rate of a bitmap or a texture for a picture is relatively low, and space occupied in a read-only memory is relatively large. In addition, for an existing electronic device, a thumbnail with a relatively large dimension is generally stored in a JPG format.

Therefore, in this embodiment of this application, a thumbnail A with a relatively large dimension may be stored in a format with a relatively high encoding compression rate, such as JPG or portable network graphics (portable network graphics, PNG). When displaying the thumbnail A with a relatively large dimension, the electronic device may first obtain, in the foregoing manner, a corresponding thumbnail B with a relatively small dimension, and directly display the thumbnail B in a display region A that originally needs to display the thumbnail A in a gallery. In addition, the electronic device obtains the thumbnail A from the memory, decodes the thumbnail A in the background, and replaces the thumbnail B with the thumbnail A after decoding is completed, so that the electronic device can display the thumbnail A with a relatively large dimension in the display region A.

Still refer to FIG. 4. In some implementations, after the thumbnail cache generation module stores data of a plurality of levels of thumbnails of a media file such as the picture or the video into the memory, when the user needs to view a thumbnail A of the picture in the gallery, the picture obtaining module may obtain, from the memory by using a thumbnail obtaining interface, a thumbnail B of the same picture whose dimension is smaller than the dimension of the thumbnail A, and display, by using a display unit, the thumbnail B in the display region A that originally needs to display the thumbnail A. In addition, the picture obtaining module obtains the thumbnail A from the memory by using the thumbnail obtaining interface. The electronic device decodes the thumbnail A in the background, and replaces the thumbnail B with the thumbnail A after decoding is completed, so that the electronic device can display the thumbnail A with a relatively large dimension in the display region A.

In some implementations, when the user needs to view a thumbnail A of the picture in the gallery, the picture obtaining module may obtain, from the memory by using a thumbnail obtaining interface, the thumbnail A and a thumbnail B of the same picture whose dimension is smaller than the dimension of the thumbnail A, and first display, by using a display unit, the thumbnail B in the display region A that originally needs to display the thumbnail A. In addition, the electronic device decodes the thumbnail A in the background, and replaces the thumbnail B with the thumbnail A after decoding is completed, so that the electronic device can display the thumbnail A with a relatively large dimension in the display region A.

For example, the thumbnail A may be a daily thumbnail, and the thumbnail B may be a thumbnail whose dimension is smaller than that of a daily thumbnail, such as a weekly thumbnail, a monthly thumbnail, or a yearly thumbnail.

It should be understood that, after the thumbnail B first displayed by the electronic device is enlarged to the dimension the same as that of the thumbnail A, the thumbnail B is displayed in the display region that originally needs to display the thumbnail A.

In this way, for a thumbnail with a relatively large dimension, in this application, the thumbnail may be stored in a format with a relatively high encoding compression rate, such as JPG or PNG, so that memory space occupied by the thumbnail is relatively small. In addition, during display, the electronic device first displays a thumbnail with a relatively small dimension that does not need to be decoded, decodes a thumbnail with a relatively large dimension in the background, and replaces the thumbnail with the relatively small dimension with the thumbnail with the relatively large dimension after decoding is completed. Because a thumbnail with a relatively small dimension is stored in a continuous storage manner and does not need to be decoded during display, the electronic device can read and display the thumbnail with the relatively small dimension relatively quickly, so that the electronic device can be prevented from displaying a blank block. In addition, after decoding of a thumbnail with a relatively large dimension is completed, the electronic device replaces a previously displayed thumbnail with a relatively small dimension with the thumbnail with a relatively large dimension. The user cannot perceive this change, and a requirement of the user for quickly browsing a picture can be fully met.

In addition, for existing electronic devices, a thumbnail with a relatively large dimension is generally stored in a JPG format, and this technical solution is also applicable to these electronic devices.

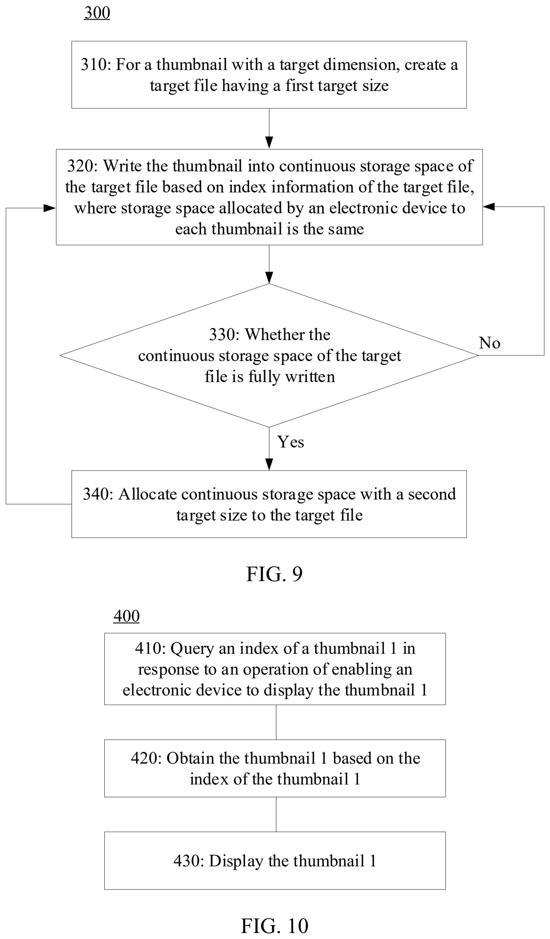

With reference to FIG. 9, the following describes in detail a technical solution of continuously storing thumbnails according to an embodiment of this application.

For example, FIG. 9 is a schematic flowchart of a method for continuously storing thumbnails according to an embodiment of this application. As shown in FIG. 9, the method 300 may include step 310 to step 340.

310: For a thumbnail with a target dimension, an electronic device creates a target file having a first target size.

For example, for a same taken picture, the electronic device may store a plurality of types of thumbnails with different dimensions. For each type of thumbnail of a different dimension, the electronic device may create a target file corresponding to the thumbnail.

The thumbnail with the target dimension may be a thumbnail with a relatively small dimension described above, for example, a monthly thumbnail or a yearly thumbnail. Alternatively, the thumbnail with the target dimension may be a thumbnail with a relatively large dimension described above, for example, a daily thumbnail.

For example, if the target dimension is 256*256, the electronic device may create a target file 1 with the first target size, and the first target size may be N times a size of storage space occupied by one thumbnail with the target dimension.

It may be understood that the target file may be an example of the file used to store a thumbnail described in FIG. 5 and FIG. 8.

320: The electronic device writes the thumbnail into continuous storage space of the target file based on index information of the target file, where storage space allocated by the electronic device to each thumbnail is the same.

When needing to write a thumbnail into the continuous storage space of the target file, the electronic device may write the thumbnail into the continuous storage space of the target file based on the index information of the target file. For example, the electronic device may first query the index information of the target file, determine next free storage space in the target file, and write the thumbnail into the next free storage space.

For each thumbnail stored in the continuous storage space of the target file, storage space allocated by the electronic device to the thumbnail is fixed. For example, the storage space allocated by the electronic device to each thumbnail is 32 KB. If a size of a thumbnail is less than 32 KB, when storing the thumbnail, the electronic device may perform zero padding processing on storage space occupied by the thumbnail, so that storage space finally allocated to the thumbnail is 32 KB.

It may be understood that, after writing a thumbnail into the continuous storage space of the target file, the electronic device may modify, in the index information of the target file, indication information of an index corresponding to the thumbnail, for example, modify the indication information from "0" to "1". In addition, the index corresponding to the thumbnail is returned to user mode space, so as to facilitate subsequent reading of the thumbnail.

In this way, the electronic device may continuously store a plurality of thumbnails that need to be stored.

330: The electronic device determines whether the continuous storage space of the target file is fully written.

The electronic device may determine, based on the index information of the target file, whether the target file is fully written. For example, for an index X, a value 1 of the index X indicates "occupied", and a value 0 of the index X indicates "not occupied".

In some examples, refer to FIG. 8. When the electronic device writes a thumbnail into the target file, and determines, by querying the index information, that indication information of an index 1 to an index P is 1, the electronic device may determine that the target file is fully written, and may perform step 340. Alternatively, when determining that the target file is about to be fully written, the electronic device may perform step 340.

In some other examples, when the electronic device determines, based on the index information, that an index whose indication information is 0 exists, and may determine that the target file is not fully written, the electronic device may continue to perform step 320, to store the thumbnail into the target file when the thumbnail needs to be generated.

340: The electronic device allocates continuous storage space with a second target size to the target file.

When the electronic device determines that the target file is fully written, the electronic device may allocate the continuous storage space with the second target size to the target file, where the second target size may be M times the first target size, and M is a positive integer. For example, M is 2 or 4. A specific value of M is not limited in this embodiment of this application.

It should be understood that, after step 340, when needing to continue to write a thumbnail, the electronic device may continue to perform step 320.

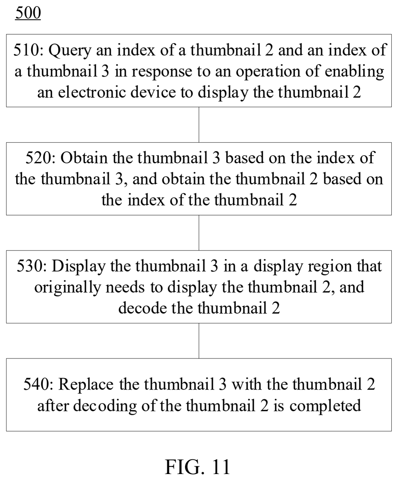

In this way, the electronic device can continuously store thumbnails, so that when subsequently displaying a plurality of thumbnails, the electronic device can continuously read the thumbnails, thereby increasing a speed of reading the thumbnails. The following describes in detail a technical solution of reading a thumbnail by an electronic device with reference to FIG. 10 and FIG. 11.

For example, FIG. 10 is a schematic flowchart of reading a thumbnail according to an embodiment of this application. As shown in FIG. 10, the method 400 may be applied to an electronic device, and the method 400 may include step 410 to step 430.

410: The electronic device queries an index of a thumbnail 1 in response to an operation of enabling the electronic device to display the thumbnail 1.

For example, the thumbnail 1 may be a thumbnail whose dimension is less than a preset dimension. Alternatively, the thumbnail 1 may be a thumbnail with a relatively small dimension described above. For example, the first target thumbnail is a monthly thumbnail or a yearly thumbnail.

In some implementations, the operation of enabling the electronic device to display the thumbnail 1 may alternatively be an operation of sliding by a user in a display interface A of a gallery. For example, the display interface A may be a display interface used to display a monthly thumbnail. When the electronic device detects an operation of sliding downward or upward in the display interface A by the user, the electronic device displays a plurality of thumbnails (for example, 102 thumbnails) with the sliding operation of the user, and each of the plurality of thumbnails is the thumbnail 1. In this case, the electronic device may first query the index of the thumbnail 1.

For example, at a moment, with the sliding operation of the user, the electronic device needs to display a plurality of thumbnails. In this case, the electronic device needs to first obtain, from a media library, information about the thumbnail that needs to be displayed. For example, the information may include a file name, a creation date, a uniform resource locator, and an index of the thumbnail.

420: The electronic device obtains the thumbnail 1 based on the index of the thumbnail 1.

After obtaining the index of the thumbnail 1 that needs to be displayed, the electronic device may obtain the thumbnail 1 from a memory based on the index. For example, in the electronic device, the thumbnail 1 is stored in a bitmap or texture format.

It should be understood that thumbnails 1 may be continuously stored in the foregoing storage manner. Therefore, the electronic device continuously reads data of a plurality of thumbnails 1 based on indexes of the plurality of thumbnails 1, so that a data reading speed can be increased.

430: The electronic device displays the thumbnail 1.

In some examples, when the thumbnail 1 is stored in the bitmap format, because the thumbnail 1 is not compressed during storage, after obtaining data in the bitmap format of the thumbnail 1, the electronic device may directly display the thumbnail 1 by using a display unit.

In some examples, when the thumbnail 1 is stored in the texture format, after obtaining data in the texture format of the thumbnail 1, the electronic device may perform data processing in the format on the texture by using a GPU, and directly display the thumbnail 1 by using the display unit.

It should be understood that in the foregoing two manners, the electronic device may directly display the thumbnail 1 without decoding the thumbnail 1.

In this way, when displaying a plurality of thumbnails, the electronic device may continuously read the plurality of thumbnails, thereby increasing a data reading speed. In addition, when reading data, the electronic device may directly display the thumbnail without decoding the data, so that a speed of displaying the thumbnail can be increased, and the electronic device can quickly display a thumbnail that needs to be displayed with a sliding operation of the user, thereby avoiding displaying a blank block.

In some cases, for some thumbnails with a relatively large dimension, for example, a daily thumbnail, in a scenario in which the user quickly slides so that a plurality of thumbnails need to be quickly displayed, for example, the electronic device needs to transmit 90 frames per second, to avoid displaying a blank block, the electronic device needs to first obtain a thumbnail with a relatively small dimension, and display the thumbnail with the relatively small dimension in a display region of the thumbnail with the relatively large dimension after enlarging the dimension of the thumbnail with the relatively small dimension. The following describes the technical solution with reference to FIG. 11.

For example, FIG. 11 is another schematic flowchart of reading a thumbnail according to an embodiment of this application. As shown in FIG. 11, the method 500 may be applied to an electronic device, and the method 500 may include step 510 to step 540.

510: Query an index of a thumbnail 2 and an index of a thumbnail 3 in response to an operation of enabling the electronic device to display the thumbnail 2, where a dimension of the thumbnail 3 is less than a dimension of the thumbnail 2.

For example, the thumbnail 2 may be a thumbnail whose dimension is greater than or equal to a preset dimension, and the thumbnail 3 may be a thumbnail that is corresponding to a same picture and whose dimension is less than that of the thumbnail 2. It should be understood that the thumbnail 2 may be a thumbnail with a relatively large dimension described above, and the thumbnail 3 may be a thumbnail with a relatively small dimension described above.

For example, for a picture A taken by the electronic device, the thumbnail 2 is a daily thumbnail corresponding to the picture A, and the thumbnail 3 is a monthly thumbnail corresponding to the picture A. It should be understood that the thumbnail 3 may alternatively be a weekly thumbnail or a yearly thumbnail corresponding to the picture A.

It should be understood that, for a manner of querying the index by the electronic device, refer to related descriptions in step 410. For brevity, details are not described herein again.

520: The electronic device obtains the thumbnail 3 based on the index of the thumbnail 3, and obtains the thumbnail 2 based on the index of the thumbnail 2.

It should be understood that the electronic device may obtain, based on the index of the thumbnail 3, the thumbnail 3 in a bitmap or texture format that can be directly displayed. As described above, because the thumbnail 2 with a relatively large dimension is stored into a memory after being encoded and compressed, the electronic device obtains an encoded thumbnail 3 based on the index of the thumbnail 2, and the thumbnail 3 can be displayed only after being decoded.

530: The electronic device displays the thumbnail 3 in a display region of the thumbnail 2, and decodes the thumbnail 2.

After obtaining the thumbnail 3 in the bitmap or texture format, the electronic device may directly display the thumbnail 3 in the display region that originally needs to display the thumbnail 2.

For example, if the dimension of the thumbnail 2 is 256*256, and the dimension of the thumbnail 3 is 128*128, the electronic device may enlarge the dimension of the thumbnail 3 to 256*256, and then display the thumbnail 3 in the display region that originally needs to display the thumbnail 2, so that the electronic device displays the thumbnail 2 from a perspective of a user.

It should be understood that when displaying the thumbnail 3, the electronic device may synchronously decode the encoded thumbnail 2 in a background.

540: The electronic device replaces the thumbnail 3 with the thumbnail 2 after decoding of the thumbnail 2 is completed.

The electronic device may replace the thumbnail 3 with the thumbnail 2 for display after decoding of the thumbnail 2 is completed. Because the electronic device does not need to perform decoding when displaying the thumbnail 3, with a quick sliding operation of the user, the electronic device may quickly display a plurality of thumbnails that need to be displayed.

In addition, the electronic device replaces the thumbnail 3 with the thumbnail 2 after decoding of the thumbnail 2 is completed. This process takes a relatively short time, and the user hardly perceives the change. For the user, the electronic device displays the thumbnail 2 with a relatively large dimension, so that good quick browsing experience can be brought to the user.

In some cases, because a speed of sliding a picture by the user is relatively high, the electronic device needs to switch, with the sliding operation of the user, a plurality of thumbnails displayed on a display. A plurality of thumbnails 2 that need to be displayed previously may be still decoded in the background, and the user has continued to slide. Therefore, the electronic device does not need to display the plurality of thumbnails 2, but needs to display another plurality of thumbnails 2.

Therefore, the method 500 may further include:
when determining that the thumbnail 2 does not need to be displayed, the electronic device cancels decoding of the thumbnail 2.

For example, because the display of the electronic device needs to display a plurality of thumbnails at a time, when the electronic device decodes a plurality of thumbnails 2 in the background, if 10 thumbnails are still waiting for decoding in a decoding queue, a sliding operation of the user is detected in this case, and the electronic device needs to display another thumbnail, the electronic device may cancel decoding tasks of the 10 thumbnails, and continue to decode the another thumbnail that needs to be displayed.

In this way, the electronic device may preferentially decode a thumbnail that currently needs to be displayed, so as to ensure that currently displayed pictures have no blank block. In addition, canceling decoding of a thumbnail that has been slid away by the user and does not need to be displayed can reduce power consumption of the electronic device.

It may be understood that the electronic device may further provide a plurality of display policies for the user to select. For example, the electronic device may provide a quick access policy, a balanced access policy, and a high-quality access policy.

The manner shown in FIG. 11 may be a balanced access policy.

For example, for the quick access policy, in response to an operation of enabling the electronic device to display a thumbnail A1, the electronic device may obtain a thumbnail B1 whose dimension is smaller than that of the thumbnail A1, and display the thumbnail B1 in a display region of the thumbnail A1. For example, the thumbnail A1 is a daily thumbnail, and the thumbnail B1 is a monthly thumbnail. Alternatively, the thumbnail A1 is an original picture, and the thumbnail B1 is a daily thumbnail.

In this way, the electronic device can quickly display the picture.

For the high-quality access policy, in response to an operation of enabling the electronic device to display a thumbnail A2, the electronic device may obtain data in an original dimension of the thumbnail A2, and display the thumbnail A2. Therefore, the thumbnail A2 displayed by the electronic device can be clearer.

It may be understood that, for the foregoing plurality of display policies, the user may select a display policy for use in an application.

In another example, the electronic device may alternatively determine a corresponding display policy based on a sliding speed of the user.

For example, when the electronic device determines that the sliding speed of the user in a display interface of a gallery application is less than a preset speed, the electronic device obtains a thumbnail that needs to be displayed and displays the thumbnail after decoding is completed, so that a use requirement of the user can be met, and the electronic device can determine to make the high-quality access policy take effect.

When the electronic device determines that the sliding speed of the user in the display interface of the gallery application is greater than or equal to the preset speed, it may take a relatively long time for the electronic device to obtain a thumbnail that needs to be displayed and display the thumbnail after decoding is completed, thereby causing a phenomenon of displaying a blank block. Therefore, the electronic device may determine to make the balanced access policy take effect, so as to implement quick display of the thumbnail and avoid a phenomenon of displaying a blank block.

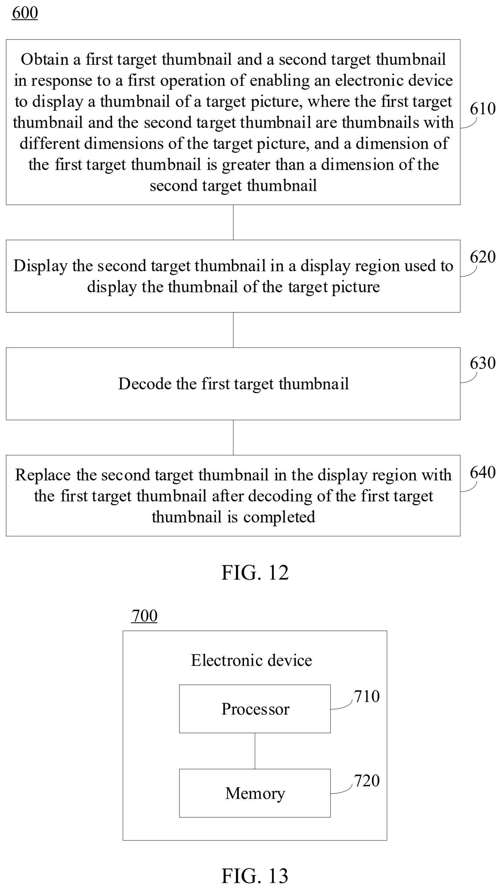

FIG. 12 is a schematic flowchart of a thumbnail display method according to an embodiment of this application. As shown in FIG. 12, the method 600 may be applied to an electronic device, and the method 600 may include step 610 to step 640.

610: The electronic device obtains a first target thumbnail and a second target thumbnail in response to a first operation of enabling the electronic device to display a thumbnail of a target picture, where the first target thumbnail and the second target thumbnail are thumbnails with different dimensions of the target picture, and a dimension of the first target thumbnail is greater than a dimension of the second target thumbnail.

It should be understood that the first target thumbnail may be a thumbnail with a relatively large dimension described above, for example, a daily thumbnail, and the second target thumbnail may be a thumbnail with a relatively small dimension described above, for example, a monthly thumbnail or a yearly thumbnail.

For example, the first operation may be an operation of tapping a gallery by a user, and when the electronic device exits the gallery last time, a dimension of a thumbnail of the target picture displayed in the gallery is the same as the dimension of the first target thumbnail. Alternatively, the first operation may be an operation of sliding upward or downward in the gallery by the user, and in this case, a dimension of a thumbnail of the target picture displayed in the gallery is the same as the dimension of the first target thumbnail. Alternatively, the first operation may be an operation of sliding by the user with two fingers to zoom in the thumbnail when a dimension of the target picture displayed in the gallery is the same as the dimension of the second target thumbnail.

620: The electronic device displays the second target thumbnail in a display region used to display the thumbnail of the target picture.

The electronic device first displays the second target thumbnail in the display region used to display the thumbnail of the target picture. For example, the electronic device may further first enlarge the dimension of the second target thumbnail to the dimension the same as the dimension of the first target thumbnail, and then display the second target thumbnail in the display region.

630: The electronic device decodes the first target thumbnail.

It may be understood that step 620 and step 630 may be performed synchronously. In this way, when the electronic device displays the second target thumbnail, the electronic device synchronously decodes the first target thumbnail in a background.

640: The electronic device replaces the second target thumbnail in the display region with the first target thumbnail after decoding of the first target thumbnail is completed.

The electronic device replaces the second target thumbnail in the display region with the first target thumbnail after decoding of the first target thumbnail is completed, so that the first target thumbnail with a relatively large dimension is displayed in the display region.

In this way, the electronic device can read and display a thumbnail with a relatively small dimension relatively quickly, so that the electronic device can be prevented from displaying a blank block. In addition, after decoding of a thumbnail with a relatively large dimension is completed, the electronic device replaces a previously displayed thumbnail with a relatively small dimension with the thumbnail with a relatively large dimension. The user cannot perceive this change, and a requirement of the user for quickly browsing a picture can be fully met.

Based on this embodiment of this application, in response to the first operation of enabling the electronic device to display the thumbnail of the target picture, the electronic device may obtain the first target thumbnail with a relatively large dimension and the second target thumbnail with a relatively small dimension of the target picture, display the second target thumbnail with a relatively small dimension in the display region used to implement the thumbnail of the target picture, decode the first target thumbnail in a background, and replace the second target thumbnail in the display region with the first target thumbnail after decoding of the first target thumbnail is completed.

In this way, when displaying a thumbnail of a target picture, the electronic device may first display a thumbnail with a relatively small dimension, and the electronic device reads the thumbnail with the relatively small dimension at a relatively high speed. Therefore, a speed of displaying the thumbnail by the electronic device can be increased, and a phenomenon of displaying a blank block when a plurality of thumbnails are displayed at a time can be avoided.

In some embodiments, when the electronic device stores the first target thumbnail and the second target thumbnail, an encoding compression rate of the first target thumbnail is greater than an encoding compression rate of the second target thumbnail; or the first target thumbnail is stored in a format requiring encoding compression, and the second target thumbnail is stored in a format not requiring encoding compression.

For example, the encoding compression rate of the first target thumbnail is relatively high. For example, the first target thumbnail may be stored in a JPG or PNG format. The encoding compression rate of the second target thumbnail is relatively low. For example, the second target thumbnail may be stored in a texture format. Alternatively, the second target thumbnail may be stored in a format not requiring encoding compression. For example, the second target thumbnail may be stored in a bitmap format.

It should be understood that a storage format not requiring encoding compression may also be understood as a storage format with an encoding compression rate 0.

Based on this embodiment of this application, the encoding compression rate of the first target thumbnail is greater than the encoding compression rate of the second target thumbnail; or the first target thumbnail is stored in a format requiring encoding compression, and the second target thumbnail is stored in a format not requiring encoding compression.

In this way, the electronic device can quickly display the second target thumbnail, so that a phenomenon of displaying a blank block can be avoided.

In some embodiments, obtaining the first target thumbnail and the second target thumbnail in response to the first operation of enabling the electronic device to display the thumbnail of the target picture includes:
obtaining, by the electronic device, an index of the first target thumbnail and an index of the second target thumbnail in response to the first operation; and
obtaining, by the electronic device, the first target thumbnail and the second target thumbnail based on the index of the first target thumbnail and the index of the second target thumbnail.

It should be understood that, for a manner in which the electronic device obtains the index of the first target thumbnail and the index of the second target thumbnail, refer to related descriptions in step 410 described above. For brevity, details are not described herein again.

It should be understood that for a manner in which the electronic device obtains the first target thumbnail and the second target thumbnail, refer to related descriptions of step 420 described above.

Based on this embodiment of this application, the electronic device may obtain the first target thumbnail based on the index of the first target thumbnail, and obtain the second target thumbnail based on the index of the second target thumbnail, so that the electronic device can quickly obtain the thumbnail.

In some embodiments, before the response to the first operation, the method 600 may further include:

For a thumbnail with a target dimension, the electronic device creates a target file used to store the thumbnail with the target dimension, where the target file has continuous storage space with a first target size; and
when the thumbnail with the target dimension is stored, the electronic device writes the thumbnail with the target dimension into the continuous storage space of the target file based on index information of the target file.

It should be understood that the target file may be the file used to store a thumbnail described in FIG. 5.

Refer to FIG. 8. The first target size may be the preset size in FIG. 8, for example, may be the size of the storage space corresponding to the index 1 to the index P.

Still refer to FIG. 8. When storing a thumbnail, the electronic device may write the thumbnail into the continuous storage space of the target file based on an index.

Based on this embodiment of this application, for a thumbnail with a target dimension, the electronic device may be configured to store a target file of the thumbnail. The target file has continuous storage space. When storing the thumbnail with the target dimension, the electronic device stores the thumbnail with the target dimension into the continuous storage space of the target file.

In this way, when storing a plurality of thumbnails, the electronic device can implement continuous storage of the thumbnails, to avoid scattered storage of the plurality of thumbnails, so that when the thumbnails need to be read subsequently, the thumbnails can be continuously read, thereby increasing a speed of reading the thumbnails.

In some embodiments, that the electronic device writes the thumbnail with the target dimension into the continuous storage space of the target file based on the index information of the target file includes:

The electronic device determines next available storage space in the continuous storage space based on the index information; and
the electronic device writes the thumbnail with the target dimension into the next available storage space.

For example, refer to FIG. 8. It is assumed that the storage space corresponding to the index 1 to the index 7 in the current target file is occupied. When a newly added thumbnail exists, the electronic device may determine, by using the index information, that next available storage space is storage space corresponding to the index 8, and the electronic device may store the newly added thumbnail into the storage space corresponding to the index 8.

Based on this embodiment of this application, the target file may have index information, so that when storing the thumbnail, the electronic device can find next available storage space by using the index information, and store the thumbnail into the next available storage space, thereby implementing continuous storage of the thumbnail.

In some embodiments, the electronic device allocates same storage space to thumbnails with a same target dimension.

For example, refer to FIG. 8. Storage space corresponding to each index is the same. In this way, when the electronic device stores a thumbnail, a rule is relatively simple, and the thumbnail only needs to be written into storage space of a fixed size.

Based on this embodiment of this application, the electronic device allocates same storage space to thumbnails with a same target dimension. In this way, performance of reading a thumbnail by the electronic device can be improved.

In some embodiments, the method 600 may further include:

When the continuous storage space of the target file is fully written, the electronic device allocates continuous storage space with a second target size to the target file.

For example, the second target size may be M times the first target size, and M is a positive integer.

It should be understood that the continuous storage space with the first target size and the continuous storage space with the second target size may be continuous or discontinuous.

For example, refer to FIG. 8. When the continuous storage space with the first target size is fully written, the electronic device may continue to allocate the continuous storage space with the second target size to the target file. For example, indexes corresponding to the continuous storage space with the first target size are the index 1 to the index P, and indexes corresponding to the continuous storage space with the second target size are an index K to an index Q.

Based on this embodiment of this application, when the continuous storage space of the target file is fully written, the electronic device continues to allocate the continuous storage space of the second target size to the target file, so that subsequently stored thumbnails can also be continuously stored.

In some embodiments, a storage format of the second target thumbnail includes a bitmap or a texture.

It may be understood that the storage format of the second target thumbnail may alternatively include another storage format with a relatively low encoding compression rate, or another storage format not requiring encoding compression.

Based on this embodiment of this application, the storage format of the second target thumbnail includes a bitmap or a texture. In this way, the electronic device does not need to perform decoding when displaying the second target thumbnail, so that a speed of displaying the thumbnail by the electronic device can be increased, and a phenomenon of displaying a blank block can be avoided.

In some embodiments, the first operation is an operation used to trigger the electronic device to display a thumbnail with a first target dimension, the first target dimension is the dimension of the first target thumbnail, and the method 600 further includes:

The electronic device obtains the second target thumbnail in response to a second operation of enabling the electronic device to display the thumbnail of the target picture, where the second operation is an operation used to trigger the electronic device to display a thumbnail with a second target dimension, the second target dimension is the dimension of the second target thumbnail, and the second target dimension is less than the first target dimension; and
the electronic device displays the second target thumbnail in the display region.

For example, the first target dimension may be 256*256, and the second target dimension may be 128*128, 64*64, or the like.

For example, the second operation may be an operation of tapping a gallery by a user, and when the electronic device exits the gallery last time, a dimension of a thumbnail of the target picture displayed in the gallery is the same as the dimension of the second target thumbnail. Alternatively, the second operation may be an operation of sliding upward or downward in the gallery by the user, and in this case, a dimension of a thumbnail of the target picture displayed in the gallery is the same as the dimension of the second target thumbnail. Alternatively, the second operation may be an operation of sliding by the user with two fingers to zoom out the thumbnail when the thumbnail of the first target dimension is displayed in the gallery.

Based on this embodiment of this application, the electronic device may obtain the second target thumbnail in response to the second operation of enabling the electronic device to display the thumbnail with the second target dimension, and directly display the second target thumbnail. In this way, a speed of displaying a thumbnail by the electronic device can be increased, and displaying a blank block can be avoided.

In some embodiments, the method 600 further includes:
in a case in which decoding of the first target thumbnail is not completed, canceling a decoding operation performed on the first target thumbnail when determining that the first target thumbnail does not need to be continuously displayed.

Based on this embodiment of this application, in a case in which decoding of the first target thumbnail is not completed, the electronic device cancels the decoding operation performed on the first target thumbnail when determining that the first target thumbnail does not need to be continuously displayed. In this technical solution, the first target thumbnail can be prevented from being decoded when the first target thumbnail does not need to be displayed, thereby reducing power consumption of the electronic device.

In some embodiments, that the electronic device determines that the first target thumbnail does not need to be continuously displayed includes:

When the electronic device no longer displays the display region, the electronic device determines that the first target thumbnail does not need to be continuously displayed.

That the electronic device no longer displays the display region may include: The electronic device needs to display another thumbnail with a sliding operation of a user; or the electronic device responds to an operation of exiting a gallery by the user.

Based on this embodiment of this application, the electronic device may determine whether to continue to display the first target thumbnail.

FIG. 13 is a block diagram of an electronic device according to an embodiment of this application. As shown in FIG. 13, the electronic device 700 may include one or more processors 710 and one or more memories 720. The one or more memories 720 store one or more instructions. When the instructions are executed by the one or more processors 710, the thumbnail display method according to any one of the foregoing possible implementations is performed.

For example, the electronic device 700 may be the foregoing electronic device 100, the electronic device in FIG. 4, or the like.

The electronic device 700 may be configured to perform the foregoing method 300, method 400, method 500, method 600, and the like.

An embodiment of this application further provides an apparatus. The apparatus includes a processor and a communication interface, the communication interface is configured to receive a signal and transmit the signal to the processor, and the processor processes the signal, so that the thumbnail display method according to any one of the foregoing possible implementations is performed.

The apparatus may be a chip. For example, the chip may be a chip system, an independent chip, or the like.

An embodiment of this application further provides a readable storage medium. The readable storage medium stores instructions. When the instructions are run on an electronic device, the electronic device is enabled to perform the foregoing related method steps, to implement the thumbnail display method in the foregoing embodiments.

An embodiment of this application further provides a program product. When the program product is run on an electronic device, the electronic device is enabled to perform the foregoing related steps, to implement the thumbnail display method in the foregoing embodiments.

An embodiment of this application further provides a thumbnail display apparatus, including a module configured to implement the thumbnail display method in any one of the foregoing embodiments.

In addition, an embodiment of this application further provides an apparatus. The apparatus may be specifically a chip, a component, or a module. The apparatus may include a processor and a memory that are connected. The memory is configured to store instructions. When the apparatus runs, the processor may execute the instructions stored in the memory, to enable the apparatus to perform the thumbnail display method in the foregoing method embodiments.

The device, the readable storage medium, the program product, or the apparatus provided in embodiments may be configured to perform the corresponding methods provided above. Therefore, for beneficial effects that can be achieved, refer to beneficial effect of the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thumbnail display method, wherein the method is applied to an electronic device, and the method comprises:
obtaining a first target thumbnail and a second target thumbnail in response to a first operation of enabling the electronic device to display a thumbnail of a target picture, wherein the first target thumbnail and the second target thumbnail are thumbnails with different dimensions of the target picture, and a dimension of the first target thumbnail is greater than a dimension of the second target thumbnail;
displaying the second target thumbnail in a display region used to display the thumbnail of the target picture;
decoding the first target thumbnail; and
replacing the second target thumbnail in the display region with the first target thumbnail after decoding of the first target thumbnail is completed.

2. The method according to claim 1, wherein when the electronic device stores the first target thumbnail and the second target thumbnail, an encoding compression rate of the first target thumbnail is greater than an encoding compression rate of the second target thumbnail; or
the first target thumbnail is stored in a format requiring encoding compression, and the second target thumbnail is stored in a format not requiring encoding compression.

3. The method according to claim 1 or 2, wherein obtaining the first target thumbnail and the second target thumbnail in response to the first operation of enabling the electronic device to display the thumbnail of the target picture comprises:
obtaining an index of the first target thumbnail and an index of the second target thumbnail in response to the first operation; and
obtaining the first target thumbnail and the second target thumbnail based on the index of the first target thumbnail and the index of the second target thumbnail.

4. The method according to any one of claims 1 to 3, wherein before the response to the first operation, the method further comprises:
for a thumbnail with a target dimension, creating a target file used to store the thumbnail with the target dimension, wherein the target file has continuous storage space with a first target size; and
when the thumbnail with the target dimension is stored, writing the thumbnail with the target dimension into the continuous storage space of the target file based on index information of the target file.

5. The method according to claim 4, wherein writing the thumbnail with the target dimension into the continuous storage space of the target file based on the index information of the target file comprises:
determining next available storage space in the continuous storage space based on the index information; and
writing the thumbnail with the target dimension into the next available storage space.

6. The method according to claim 5, wherein the electronic device allocates same storage space to thumbnails with a same target dimension.

7. The method according to any one of claims 4 to 6, wherein the method further comprises:
when the continuous storage space of the target file is fully written, allocating continuous storage space with a second target size to the target file.

8. The method according to any one of claims 1 to 7, wherein a storage format of the second target thumbnail comprises a bitmap or a texture.

9. The method according to any one of claims 1 to 8, wherein the first operation is an operation used to trigger the electronic device to display a thumbnail with a first target dimension, the first target dimension is the dimension of the first target thumbnail, and the method further comprises:
obtaining the second target thumbnail in response to a second operation of enabling the electronic device to display the thumbnail of the target picture, wherein the second operation is an operation used to trigger the electronic device to display a thumbnail with a second target dimension, the second target dimension is the dimension of the second target thumbnail, and the second target dimension is less than the first target dimension; and
displaying the second target thumbnail in the display region.

10. The method according to any one of claims 1 to 9, wherein the method further comprises:
in a case in which decoding of the first target thumbnail is not completed, canceling a decoding operation performed on the first target thumbnail when determining that the first target thumbnail does not need to be continuously displayed.

11. The method according to claim 10, wherein determining that the first target thumbnail does not need to be continuously displayed comprises:
when the electronic device no longer displays the display region, determining that the first target thumbnail does not need to be continuously displayed.

12. An electronic device, comprising one or more processors and one or more memories, wherein the one or more memories store one or more programs, and when the one or more programs are executed by the one or more processors, the thumbnail display method according to any one of claims 1 to 11 is performed.

13. A chip, wherein the chip comprises a processor and a communication interface, the communication interface is configured to: receive a signal, and transmit the signal to the processor, and the processor processes the signal, so that the thumbnail display method according to any one of claims 1 to 11 is performed.

14. A readable storage medium, wherein the readable storage medium stores instructions, and when the instructions are run on an electronic device, the thumbnail display method according to any one of claims 1 to 11 is performed.

15. A program product, wherein the program product comprises program code, and when the program code is run on an electronic device, the thumbnail display method according to any one of claims 1 to 11 is performed.
